# EUROPÄISCHE PATENTSCHRIFT

(11) **EP 2 690 756 B1**
(45) Veröffentlichungstag und Bekanntmachung des Hinweises auf die Patenterteilung: **09.01.2019**
(21) Anmeldenummer: 13003591.8
(22) Anmeldetag: 17.07.2013
(51) Int. Cl.: H02K 5/20

(54) **Elektrischer Antriebsmotor für ein Arbeitsgerät**
Electric drive motor for a machine tool
Moteur d'entraînement électrique pour un appareil de travail

(30) Priorität: 27.07.2012 DE 102012014926
(43) Veröffentlichungstag der Anmeldung: 29.01.2014
(73) Patentinhaber: Andreas Stihl AG & Co. KG, 71336 Waiblingen (DE)
(72) Erfinder: Renz, Michael, 70374 Stuttgart (DE); Haas, Alexander, 73565 Spraitbach (DE); Neumann, Adolf Jürgen, 71560 Sulzbach an der Murr (DE); Maier, Markus, 71397 Leutenbach (DE)
(74) Vertreter: Wasmuth, Rolf

(56) Entgegenhaltungen:
- EP-A1- 0 052 383
- WO-A1-01/33698
- US-A1- 2007 273 221

## Beschreibung

Die Erfindung betrifft einen elektrischen Antriebsmotor für ein Arbeitsgerät, wie z.B. schon in US2007/273221 A1 offenbart, nach dem Oberbegriff des Anspruchs 1.

Elektrische Antriebsmotoren für tragbare, handgeführte Arbeitsgeräte wie z. B. Motorkettensägen, Heckenscheren, Freischneider usw. sind an sich bekannt. Derartige Arbeitsgeräte werden so konstruiert, dass sie klein und handlich sind, damit sie leicht und sicher geführt werden können. In engen Gerätegehäusen eingesetzte elektrische Antriebsmotoren benötigen eine effiziente Kühlung, damit ein sicherer Betrieb gewährleistet ist.

Der Erfindung liegt die Aufgabe zugrunde, einen elektrischen Antriebsmotor für ein Arbeitsgerät derart auszubilden, dass eine effiziente, in jedem Betriebszustand ausreichende Kühlung des Elektromotors sichergestellt ist.

Diese Aufgabe wird nach den kennzeichnenden Merkmalen des Anspruchs 1 gelöst.

Der in Umfangsrichtung zwischen benachbarten Statorpolen liegende Polzwischenraum wird nach der Erfindung durch einen nicht magnetischen Leitkörper gefüllt. Die Ausbildung aus nicht magnetischem Material gewährleistet, dass der eingeschobene Leitkörper nicht die magnetischen Eigenschaften beeinflusst, z. B. den magnetischen Fluss verändert. Durch den eingeschobenen Leitkörper und die Wicklung wird ein Kühlkanal für den Kühlluftstrom begrenzt, so dass der Kühlluftstrom unmittelbar an der Wicklung vorbeigeführt ist und so ein guter Wärmeaustausch zwischen dem Kühlluftstrom und der Wicklung gewährleistet ist. In einfacher Weise wird der Leitkörper zur Ausbildung der Kühlkanäle an einem Ende an einem Träger festgelegt und mit dem anderen, freien Ende axial in den Polzwischenraum eingeschoben, wodurch eine einfache Montage der Füllkörper in den Polzwischenraum erzielt ist. Durch dieses fingerartige Ineinandergreifen von Stator und Träger werden der Stator und der Träger auch mechanisch miteinander drehfest verbunden.

In einfacher Weise wird der Träger stirnseitig an dem Stator festgelegt, wobei der Träger bevorzugt durch ein Lüftergehäuse gebildet ist, was ohnehin stirnseitig an dem Stator festzulegen ist.

Der Leitkörper erstreckt sich in Umfangsrichtung des Stators von einer Wicklung bis zur benachbarten Wicklung, so dass für einen Wärmeaustausch ungünstige Strömungspfade durch den Leitkörper weitgehend versperrt sind. Der Leitkörper ist zweckmäßig auf seiner dem Rotor zugewandten Seite gerundet, wobei der Leitkörper und die Polfläche der Statorpole eine gemeinsame innere, geschlossene Umfangswand bilden.

Die Anordnung der Leitkörper ist dabei so vorgesehen, dass der Leitkörper mit seinen in Umfangsrichtung liegenden Wandabschnitten jeweils einen Kühlkanal begrenzt, ein Leitkörper also zwei Kühlkanälen zugeordnet ist.

Ein Leitkörper erstreckt sich bevorzugt über mehr als die Hälfte der Höhe des Stators, zweckmäßig über etwa die Höhe eines Statorpols.

Der Kühlkanal ist auf seinem dem Träger abgewandten Ende axial offen; an seinem dem Träger zugewandten Ende ist ein Kühlluftfenster vorgesehen, das dem Rotor radial zugewandt liegt. Das Kühlluftfenster liegt etwa auf der Höhe des Randes der Ansaugöffnung zum Lüfterrad des Lüftergehäuses. Das Kühlluftfenster ist dabei durch den Leitkörper selbst und eine nicht magnetische Polverlängerung begrenzt.

Der Leitkörper selbst ist durch eine etwa U-förmig gestaltete Leitwand gebildet.

Der Elektromotor ist derart aufgebaut, dass die Rotorwelle an einem Ende das Lüfterrad trägt und an einem anderen Ende einen elektrischen Kommutator. Der vom Lüfterrad erzeugte Kühlluftstrom wird im Bereich des Kommutators in den Stator angesaugt, durch die Kühlkanäle an den Wicklungen vorbei zur Ansaugöffnung des Lüftergehäuses geführt und über das Lüfterrad ausgeblasen.

In Weiterbildung der Erfindung liegen zwei Statorpole einander diametral gegenüber, wobei der Kühlkanal von der Wicklung, dem Leitkörper, dem Statorpol und vorzugsweise durch den Stator selbst begrenzt sein kann.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Es zeigen:
- Fig. 1: ein tragbares Arbeitsgerät in Teildarstellung mit einem elektrischen Antriebsmotor,
- Fig. 2: einen Schnitt durch den Antriebsmotor in Fig. 1 in einem Arbeitsgerät,
- Fig. 3: eine perspektivische Ansicht eines Elektromotors als Antriebsmotor im Arbeitsgerät nach Fig. 1,
- Fig. 4: einen Axialschnitt durch den Elektromotor nach Fig. 3,
- Fig. 5: eine Draufsicht auf das Lüftergehäuseteil des Elektromotors nach Fig. 3,
- Fig. 6: einen Schnitt längs der Linie VI-VI in Fig. 5,
- Fig. 7: eine Draufsicht auf den Elektromotor gemäß Pfeil VII in Fig. 3,
- Fig. 8: eine Teildarstellung des Elektromotors mit Lüftergehäuseteil und Stator,
- Fig. 9: eine Seitenansicht des Lüftergehäuseteils,
- Fig. 10: eine Draufsicht auf den geschnittenen Motor gemäß Pfeil X in Fig. 8,
- Fig. 11: einen Schnitt längs der Linie XI-XI in Fig. 10,
- Fig. 12: im Schnitt eine vergrößerte Teildarstellung eines Kühlkanals.

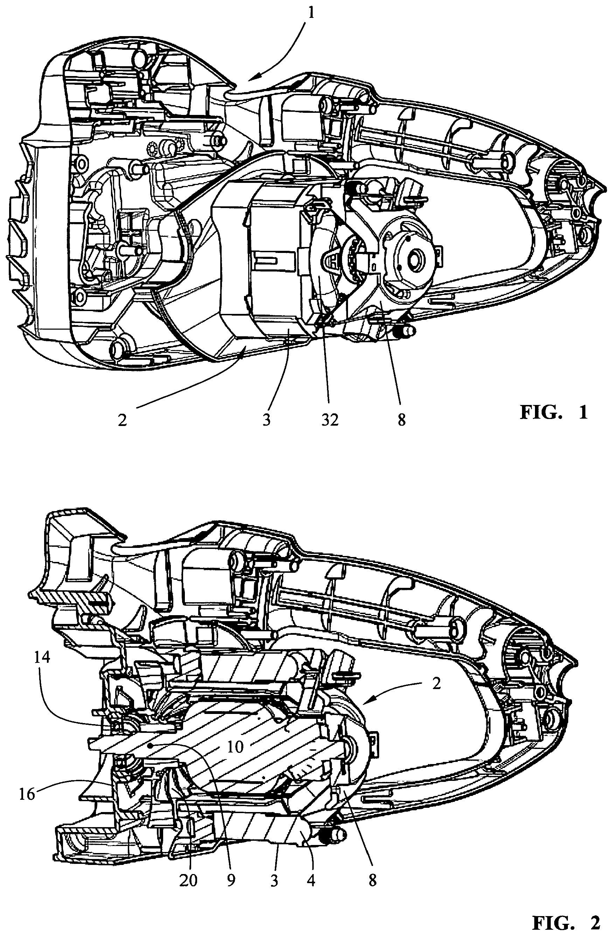

Das in Fig. 1 dargestellte Arbeitsgerät 1 ist mit einem Teilgehäuse dargestellt; das Gehäuse ist geöffnet, so dass der Blick auf den Antriebsmotor 2 offen ist.

Die in Fig. 1 gezeigte Teilschale ist das Gehäuse einer Motorkettensäge, deren Sägekette von dem Antriebsmotor 2 angetrieben ist. Im gezeigten Ausführungsbeispiel ist der Antriebsmotor 2 ein Elektromotor 3, z. B. ein Gleichstromelektromotor, ein elektrisch kommutierter Motor (EC-Motor) oder ein sonstiger Universalmotor.

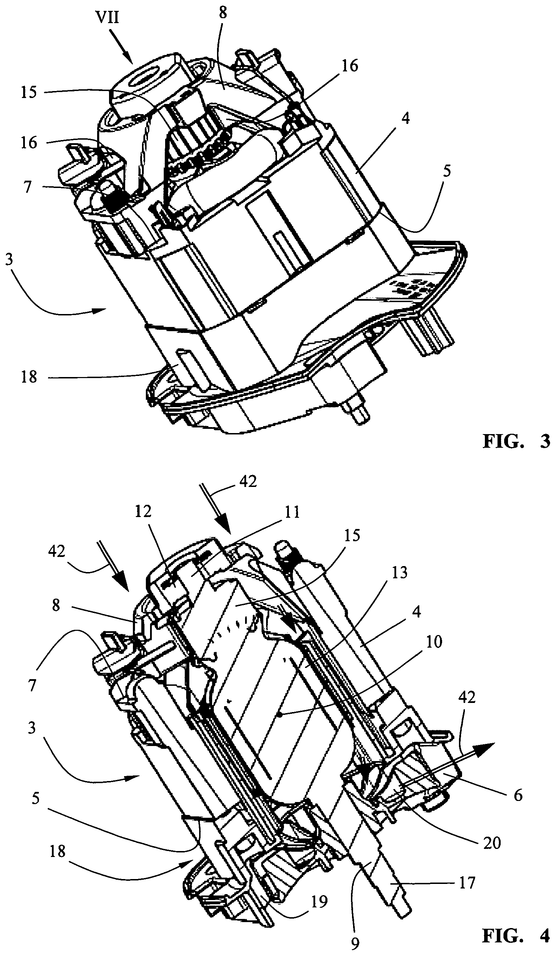

Der in Fig. 3 perspektivisch dargestellte Elektromotor 3 besteht im Wesentlichen aus einem Stator 4, an dessen einer Stirnseite 5 ein Lüftergehäuse 6 und an dessen anderer Stirnseite 7 ein Lagerschild 8 für die Rotorwelle 9 eines Rotors 10 vorgesehen ist.

Die Rotorwelle 9 ist an ihrem einen Ende 11 in einem Lager 12 gehalten (Fig. 4), welches in einer Lageraufnahme des Lagerschildes 8 gehalten ist. Das Lagerschild 8 ist am Stator 4 festgelegt.

Zwischen den Wicklungen 13 des Rotors 10 und dem Ende 11 der Rotorwelle 9 ist ein Kommutator 15 angeordnet, der in bekannter Weise mit den Enden der Wicklungen 13 auf dem Rotor 10 verbunden ist. Über den Kommutator und dessen Schleifkontakte, vorzugsweise Kohlen 24, werden den Wicklungen 13 des Rotors 10 Strom zugeführt.

Das andere Ende 17 der Rotorwelle 9 ist in einem Lager 14 abgestützt (Fig. 2), welches in der Gehäuseschale 16 (Fig. 2) des Arbeitsgerätes 1 gehalten ist.

Das Ende 17 der Rotorwelle 9 durchragt einen Träger 18, der im Ausführungsbeispiel durch das Lüftergehäuse 6 gebildet ist. Im Lüftergehäuse 6 ist eine Kühlluftspirale 19 ausgebildet, in der ein Lüfterrad 20 rotiert. Das Lüfterrad 20 fördert Kühlluft zur Kühlung des Elektromotors 3, wobei ein Kühlluftstrom 42 (Fig. 4) durch den Stator 4 des Elektromotors 3 geblasen oder gezogen wird.

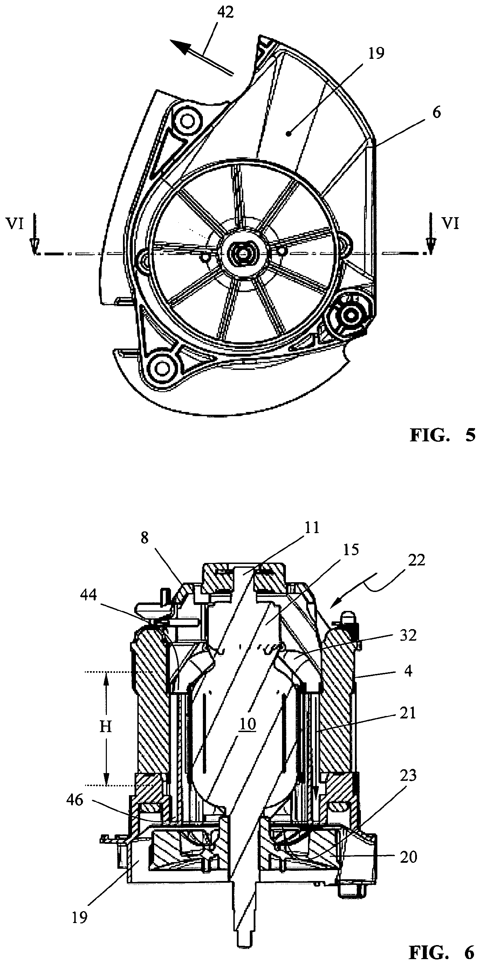

Wie in Fig. 6 dargestellt, saugt das Lüfterrad 20 derart Kühlluft an, dass diese in Richtung des Pfeils 22 zwischen den Armen des Lagerschildes 8 im Bereich des Kommutators 15 in den Stator 4 des Elektromotors 3 eintritt, in Pfeilrichtung 21 den Stator 4 durchströmt und durch eine Ansaugöffnung 23 zum Lüfterrad 20 übertritt und von diesem durch die Kühlluftspirale 19 abgefördert wird. Der vom Lüfterrad 20 erzeugte Kühlluftstrom tritt somit im Bereich des Kommutators 15 in Richtung der Pfeile 22 in den Stator 4 ein, durchströmt den Stator 4 und wird über das Lüfterrad 20 ausgeblasen. Die Kühlluft wird somit durch den Stator 4 des Elektromotors 3 axial durchgesaugt.

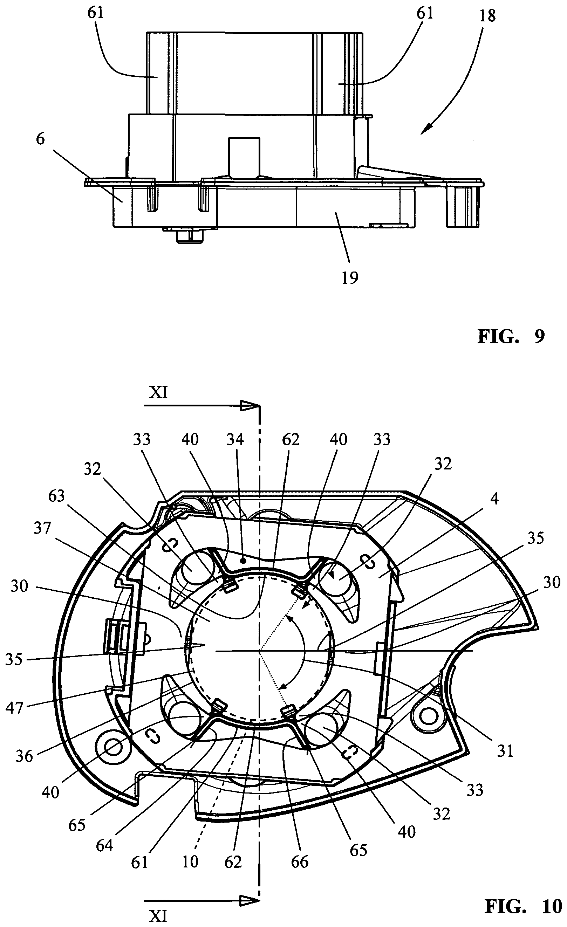

Wie die Figuren 4, 6, 8 und 10 zeigen, besteht der Stator 4 aus aufeinander gestapelten Statorblechen mit im Ausführungsbeispiel zwei Statorpolen 30, die im gezeigten Ausführungsbeispiel einander diametral gegenüberliegen und sich über einen Umfangswinkel 31 von etwa 110° erstrecken (Fig. 10). Die Statorpole 30 tragen jeweils eine Erregerwicklung 32, die fest auf den Statorpolen 30 liegen. Die Statorpole 30 sind teilkreisförmig ausgebildet, wobei zwischen ihren einander zugewandten Enden 33 ein freier Polzwischenraum 34 gebildet ist, der sich über einen Umfangswinkel von etwa 70° erstreckt.

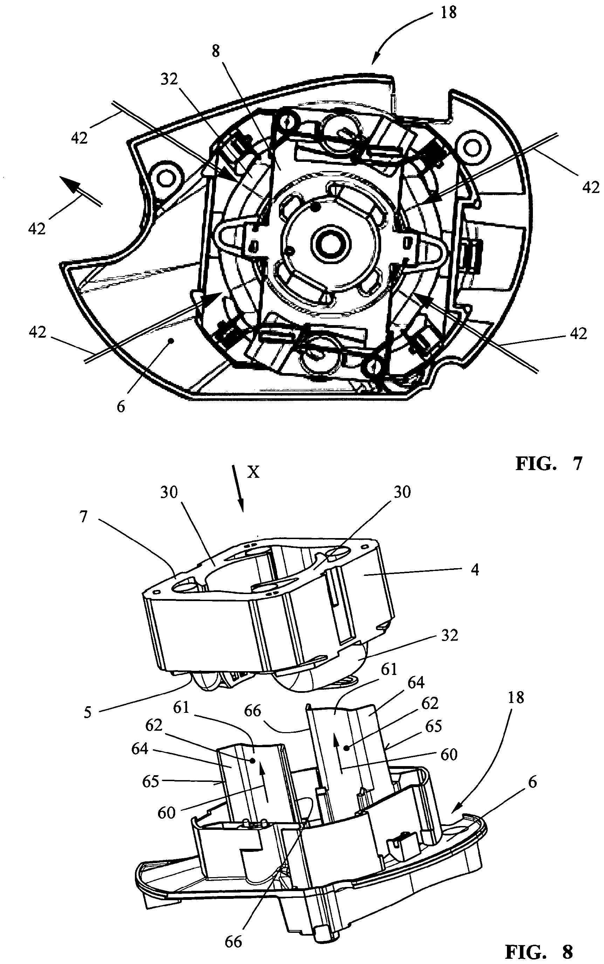

Das Lüftergehäuse 6 dient als Träger 18 für Leitkörper 61 (Fig. 8), die - wie der Schnitt in Fig. 10 zeigt - als etwa U-förmige Leitwände 62 ausgebildet sind. Im gezeigten Ausführungsbeispiel sind die Leitkörper 61 einteilig mit dem Lüftergehäuse 6 ausgebildet, bilden mit diesem also ein gemeinsames Bauteil.

Wie Fig. 8 zeigt, wird das Lüftergehäuse 6 in Pfeilrichtung 60 auf die Stirnseite 5 des Stators 4 aufgesetzt, wobei die Leitkörper 61 zwischen die Statorpole (Fig. 10) greifen und in den Polzwischenraum 34 einragen. Dabei ist die Anordnung so getroffen, dass der Leitkörper 61 den Polzwischenraum 34 vollständig füllt, wobei die dem Rotor 10 zugewandt liegende Seite 63 derart gerundet ist, dass die Leitkörper 61 und die Polflächen 35 der Statorpole 30 eine gemeinsame, geschlossene Umfangswand 36 bilden. Der Leitkörper 61 erstreckt sich dabei in Umfangsrichtung des Stators 4 von einer Erregerwicklung 32 eines Statorpols 30 bis zur Erregerwicklung 32 des benachbarten Statorpols 30.

Wie Fig. 9 zeigt, ist der Leitkörper mit einem Ende am Träger 18, d. h. am Lüftergehäuse 6 festgelegt, wobei der Leitkörper 61 aus einem nicht magnetischen Material besteht. Bevorzugt bestehen das Lüftergehäuse 6 und der Leitkörper 61 aus einem gleichen Material, insbesondere aus Kunststoff.

Die Schenkel 64 und 66 eines U-förmigen Leitkörpers 61 liegen mit ihrer Endkante 65 am Grundkörper des Stators 4 an. Dabei erstreckt sich jeder Schenkel 64, 66 vom Ende 33 des Statorpols bis an den Grundkörper des Stators 4 selbst, so dass durch den Leitkörper 61 bzw. dessen Schenkel 64, 66 und die Erregerwicklung 32 des Stators 4 ein Kühlkanal 40 begrenzt ist, der zur Führung eines Teilstroms des Kühlluftstroms 42 dient, der den Stator 4 axial durchströmt.

Jeder axial von der Stirnseite 5 in den Stator 4 eingeschobene Leitkörper 61 begrenzt mit seinen Schenkeln 64 und 66 jeweils einen Kühlkanal 40. Der Leitkörper 61 - und damit der Kühlkanal 40 - erstreckt sich über mehr als die Hälfte der Höhe des Stators 4, vorzugsweise über etwa die Höhe H (Fig. 6) eines Statorpols 30. Ein Leitkörper 61 begrenzt dabei jeweils zwei Kühlkanäle 40. Die Höhe H des Statorpols 30 liegt im Bereich von 20 mm bis 50 mm; vorteilhafte Bauhöhen sind 21 mm, 31 mm oder 41 mm.

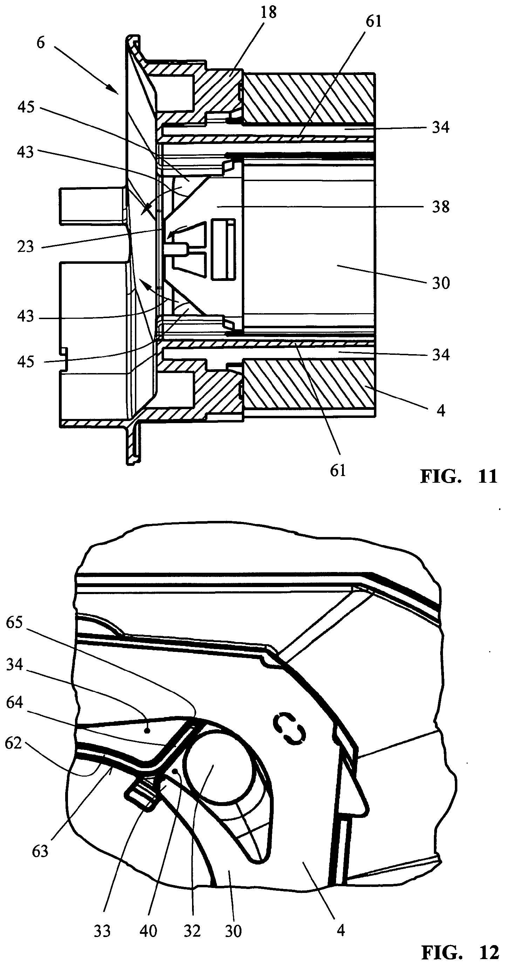

Jeder Kühlkanal 40 ist stirnseitig an seinem dem Kommutator 15 zugewandt liegenden Ende 44 axial offen; an seinem axial gegenüberliegenden Ende 46 ist der Kühlkanal axial geschlossen, weist aber ein radial nach innen öffnendes Kühlluftaustrittsfenster 45 (Fig. 11) auf, über das Teilströme 43 des Kühlluftstroms 42 in die Ansaugöffnung 23 des Lüftergehäuses 6 übertreten.

Ein Kühlluftaustrittsfenster 45 am lüfterseitigen Ende 46 des Kühlkanals 40 ist einerseits begrenzt vom Lüftergehäuse 6, von der Leitwand 62 des Leitkörpers 61 und einer nicht leitenden axialen Polverlängerung 38, die axial zwischen dem Statorpol 30 und dem Lüftergehäuse 6 liegt.

Im Betrieb des Elektromotors 3 wird mit Drehung des Rotors 10 das drehfest auf der Rotorwelle 9 festgelegte Lüfterrad 20 mitdrehen und über die Ansaugöffnung 23 Luft aus dem Statorinnenraum 37 absaugen. Dadurch entsteht ein Kühlluftstrom 42, der auf der Stirnseite 7 in den Elektromotor 3 eintritt und über die Kühlluftspirale 19 ausgeblasen wird (Fig. 4). Wie Fig. 10 zeigt, ist der Spalt 47 zwischen dem Rotor 10 und der inneren Umfangswand 36 sehr eng, hat somit einen großen Strömungswiderstand. Die zwischen den Erregerwicklungen 32 und den Leitkörpern 61 ausgebildeten Kühlkanäle 40, von denen im Ausführungsbeispiel über den Umfang des Stators 4 vier Stück vorgesehen sind, haben einen größeren Strömungsquerschnitt, so dass die Luft bevorzugt durch die Kühlkanäle 40 zur Ansaugöffnung 23 des Lüfterrades 20 strömt. Da der Kühlkanal zwischen dem - bevorzugt aus Kunststoff bestehenden - Leitkörper 61 und der Erregerwicklung 32 ausgebildet ist, die Erregerwicklung 32 selbst den Kühlkanal 40 begrenzt, steht die Erregerwicklung 32 in engem Wärme austauschenden Kontakt mit der an ihr vorbeiströmenden Kühlluft. Dadurch ist eine gute Kühlwirkung gewährleistet.

## Patentansprüche

1. Elektrischer Antriebsmotor für ein Arbeitsgerät, bestehend aus einem Stator (4) mit mindestens zwei Statorpolen (30), die in Umfangsrichtung mit Abstand zueinander liegen und jeweils eine elektrische Erregerwicklung (32) tragen, sowie mit einem zwischen den Statorpolen (30) drehenden Rotor (10), dessen Rotorwelle (9) ein Lüfterrad (20) antreibt, wobei der vom Lüfterrad (20) erzeugte Kühlluftstrom (42) in den Stator (4) eintritt, den Stator (4) durchströmt und ausgeblasen wird, **dadurch gekennzeichnet, dass** ein in Umfangsrichtung zwischen den Statorpolen (30) liegender Polzwischenraum (34) durch einen nicht magnetischen Leitkörper (61) derart gefüllt ist, dass ein durch den Leitkörper (61) und die Erregerwicklung (32) begrenzter Kühlkanal (40) für den Kühlluftstrom (42) ausgebildet ist, wobei der Leitkörper (61) an einem Ende an einem Träger (18) festliegt und mit dem anderen Ende axial in den Stator (4) eingeschoben ist.

2. Antriebsmotor nach Anspruch 1,
**dadurch gekennzeichnet, dass** der Träger (18) stirnseitig an dem Stator (4) festgelegt ist.

3. Antriebsmotor nach Anspruch 1 oder 2,
**dadurch gekennzeichnet, dass** der Träger (18) des Leitkörpers (61) an einem Lüftergehäuse (6) festgelegt ist.

4. Antriebsmotor nach Anspruch 3,
**dadurch gekennzeichnet, dass** das Lüftergehäuse (6) eine Kühlluftspirale (19) ist.

5. Antriebsmotor nach Anspruch 3 oder 4,
**dadurch gekennzeichnet, dass** der Leitkörper (61) einteilig mit dem Lüftergehäuse (6) ausgebildet ist.

6. Antriebsmotor nach einem der Ansprüche 1 bis 5,
**dadurch gekennzeichnet, dass** sich der Leitkörper (61) in Umfangsrichtung des Stators (4) von einer Erregerwicklung (32) bis zur benachbarten Erregerwicklung (32) erstreckt.

7. Antriebsmotor nach einem der Ansprüche 1 bis 6,
**dadurch gekennzeichnet, dass** der Leitkörper (61) auf seiner dem Rotor (10) zugewandten Seite (63) gerundet ist.

8. Antriebsmotor nach Anspruch 7,
**dadurch gekennzeichnet, dass** der Leitkörper (61) und die Polflächen (35) der Statorpole (30) eine gemeinsame innere, geschlossene Umfangswand (36) bilden.

9. Antriebsmotor nach einem der Ansprüche 1 bis 8,
**dadurch gekennzeichnet, dass** ein Leitkörper (61) zwei Kühlkanäle (40) begrenzt.

10. Antriebsmotor nach einem der Ansprüche 1 bis 9,
**dadurch gekennzeichnet, dass** sich der Leitkörper (61) über mehr als die Hälfte der Höhe des Stators (4) erstreckt, vorzugsweise über die Höhe (H) eines Statorpols (30).

11. Antriebsmotor nach einem der Ansprüche 1 bis 10,
**dadurch gekennzeichnet, dass** der Kühlkanal (40) ein Kühlluftaustrittsfenster (45) aufweist, das dem Rotor (10) radial zugewandt liegt.

12. Antriebsmotor nach Anspruch 11,
**dadurch gekennzeichnet, dass** das Kühlluftaustrittsfenster (45) durch den Leitkörper (61) und eine nicht magnetische Polverlängerung (38) begrenzt ist.

13. Antriebsmotor nach einem der Ansprüche 1 bis 12,
**dadurch gekennzeichnet, dass** der Leitkörper (61) durch eine etwa U-förmige Leitwand (62) gebildet ist.

14. Antriebsmotor nach einem der Ansprüche 1 bis 13,
**dadurch gekennzeichnet, dass** die Rotorwelle (9) das Lüfterrad (20) und einen elektrischen Kommutator (15) trägt.

15. Antriebsmotor nach einem der Ansprüche 1 bis 14,
**dadurch gekennzeichnet, dass** der vom Lüfterrad (20) erzeugte Kühlluftstrom (42) im Bereich des Kommutators (15) in den Stator (4) eintritt, durch die Kühlkanäle (40) den Stator (4) durchströmt und über das Lüfterrad (20) ausgeblasen wird.

16. Antriebsmotor nach einem der Ansprüche 1 bis 15,
**dadurch gekennzeichnet, dass** der Elektromotor (3) zwei einander diametral gegenüberliegende Statorpole (30) aufweist.

17. Antriebsmotor nach einem der Ansprüche 1 bis 16,
**dadurch gekennzeichnet, dass** der Kühlkanal (40) von der Erregerwicklung (32), dem Leitkörper (61), dem Statorpol (30) und vorzugsweise durch den Stator (4) selbst begrenzt ist.

## Claims

1. Electric drive motor for a working implement, consisting of a stator (4) with at least two stator poles (30) spaced from one another in the circumferential direction and each supporting an electric filed winding (32) and with a rotor (10) rotating between the stator poles (30), its rotor shaft (9) driving a fan impeller (20), wherein the cooling air flow (42) generated by the fan impeller (20) enters the stator (4), flows through the stator (4) and is blown out,
**characterised in that** a pole gap (34) lying between the stator poles (30) in the circumferential direction is filled in such a way by a non-magnetic conducting body (61) that a cooling passage (40) bounded by the conducting body (61) and the field winding (32) is formed for the cooling air flow (42), the conducting body (61) being fixed to a support (18) at one end and inserted into the stator (4) with the other end.

2. Drive motor according to claim 1,
**characterised in that** the support (18) is fixed to the stator (4) at the end face.

3. Drive motor according to claim 1 or 2,
**characterised in that** the support (18) of the conducting body (61) is fixed to a fan housing (6).

4. Drive motor according to claim 3,
**characterised in that** the fan housing (6) is a cooling air volute (19).

5. Drive motor according to claim 3 or 4,
**characterised in that** the conducting body (61) is formed integrally with the fan housing (6).

6. Drive motor according to any of claims 1 to 5,
**characterised in that** the conducting body (61) extends in the circumferential direction of the stator (4) from one field winding (32) to the adjacent field winding (32).

7. Drive motor according to any of claims 1 to 6,
**characterised in that** the conducting body (61) is rounded on the side (63) facing the rotor (10).

8. Drive motor according to claim 7,
**characterised in that** the conducting body (61) and the pole faces (35) of the stator poles (30) form a common inner closed circumferential wall (36).

9. Drive motor according to any of claims 1 to 8,
**characterised in that** a conducting body (61) bounds two cooling passages (40).

10. Drive motor according to any of claims 1 to 9,
**characterised in that** the conducting body (61) extends along more than half of the height of the stator (4), preferably along the height (H) of a stator pole (30).

11. Drive motor according to any of claims 1 to 10,
**characterised in that** the cooling passage (40) has a cooling air outlet window (45), which radially faces the rotor (10).

12. Drive motor according to claim 11,
**characterised in that** the cooling air outlet window (45) is bounded by the conducting body (61) and a non-magnetic pole extension (38).

13. Drive motor according to any of claims 1 to 12,
**characterised in that** the conducting body (61) is represented by an approximately U-shaped conducting wall (62).

14. Drive motor according to any of claims 1 to 13,
**characterised in that** the rotor shaft (9) supports the fan impeller (20) and an electric commutator (15).

15. Drive motor according to any of claims 1 to 14,
**characterised in that** the cooling air flow (42) generated by the fan impeller (20) enters the stator (4) in the region of the commutator (15), flows through the stator (4) through the cooling passages (40) and is blown out via the fan impeller (20).

16. Drive motor according to any of claims 1 to 15,
**characterised in that** the electric motor (3) has two stator poles (30) located diametrically opposite each other.

17. Drive motor according to any of claims 1 to 16,
**characterised in that** the cooling passage (40) is bounded by the field winding (32), the conducting body (61), the stator pole (30) and preferably the stator (4) itself.

## Revendications

1. Moteur d'entraînement électrique pour un appareil de travail, composé d'un stator (4) avec au moins deux pôles de stator (30) qui sont espacés l'un de l'autre dans le sens circonférentiel et qui portent chacun un enroulement d'excitation électrique (32), et avec un rotor (10) qui tourne entre les pôles de stator (30) et dont l'arbre de rotor (9) entraîne une roue de ventilateur (20), le courant d'air de refroidissement (42) produit par la roue de ventilateur (20) entrant dans le stator (4), traversant celui-ci et étant évacué,
**caractérisé en ce qu'**un espace interpolaire (34) situé entre les pôles de stator (30) dans le sens circonférentiel est rempli par un corps de guidage non magnétique (61) de telle sorte qu'un canal de refroidissement (40) délimité par le corps de guidage (61) et l'enroulement d'excitation (32) est formé pour le courant d'air de refroidissement (42), le corps de guidage (61) étant fixe, à une extrémité, sur un support (18) et étant glissé axialement, avec son autre extrémité, dans le stator (4).

2. Moteur d'entraînement selon la revendication 1,
**caractérisé en ce que** le support (18) est fixé côté frontal au stator (4).

3. Moteur d'entraînement selon la revendication 1 ou 2,
**caractérisé en ce que** le support (18) du corps de guidage (61) est fixé au boîtier de ventilateur (6).

4. Moteur d'entraînement selon la revendication 3,
**caractérisé en ce que** le boîtier de ventilateur (6) est une spirale d'air de refroidissement (19).

5. Moteur d'entraînement selon la revendication 3 ou 4,
**caractérisé en ce que** le corps de guidage (61) est formé d'une seule pièce avec le boîtier de ventilateur (6).

6. Moteur d'entraînement selon l'une des revendications 1 à 5,
**caractérisé en ce que** le corps de guidage (61) s'étend, dans le sens circonférentiel du stator (4), d'un enroulement d'excitation (32) jusqu'à l'enroulement d'excitation voisin (32).

7. Moteur d'entraînement selon l'une des revendications 1 à 6,
**caractérisé en ce que** le corps de guidage (61) est arrondi sur son côté (63) tourné vers le rotor (10).

8. Moteur d'entraînement selon la revendication 7,
**caractérisé en ce que** le corps de guidage (61) et les surfaces (35) des pôles de stator (30) forment une paroi circonférentielle intérieure fermée commune (36).

9. Moteur d'entraînement selon l'une des revendications 1 à 8,
**caractérisé en ce qu'**un corps de guidage (61) délimite deux canaux de refroidissement (40).

10. Moteur d'entraînement selon l'une des revendications 1 à 9,
**caractérisé en ce que** le corps de guidage (61) s'étend sur plus de la moitié de la hauteur du stator (4), de préférence sur la hauteur (H) d'un pôle de stator (30).

11. Moteur d'entraînement selon l'une des revendications 1 à 10,
**caractérisé en ce que** le canal de refroidissement (40) présente une fenêtre de sortie d'air de refroidissement (45) qui est tournée radialement vers le rotor (10).

12. Moteur d'entraînement selon la revendication 11,
**caractérisé en ce que** la fenêtre de sortie d'air de refroidissement (45) est délimitée par le corps de guidage (61) et un prolongement de pôle non magnétique (38).

13. Moteur d'entraînement selon l'une des revendications 1 à 12,
**caractérisé en ce que** le corps de guidage (61) est formé par une paroi de guidage (62) à peu près en U.

14. Moteur d'entraînement selon l'une des revendications 1 à 13,
**caractérisé en ce que** l'arbre de rotor (9) porte la roue de ventilateur (20) et un commutateur électrique (15).

15. Moteur d'entraînement selon l'une des revendications 1 à 14,
**caractérisé en ce que** le courant d'air de refroidissement (42) produit par le ventilateur (20) entre dans le stator (4) dans la zone du commutateur (15), traverse le stator (4) par les canaux de refroidissement (40) et est évacué par la roue de ventilateur (20).

16. Moteur d'entraînement selon l'une des revendications 1 à 15,
**caractérisé en ce que** le moteur électrique (3) comporte deux pôles de stator (30) diamétralement opposés.

17. Moteur d'entraînement selon l'une des revendications 1 à 16,
**caractérisé en ce que** le canal de refroidissement (40) est délimité par l'enroulement d'excitation (32), le corps de guidage (61), le pôle de stator (30) et de préférence par le stator (4) lui-même.
